# FASCICULE DE BREVET EUROPEEN

(11) **EP 3 169 648 B1**
(45) Date de publication et mention de la délivrance du brevet: **30.06.2021**
(21) Numéro de dépôt: 15756194.5
(22) Date de dépôt: 16.07.2015
(51) Int. Cl.: C04B 35/80, C04B 35/591, C04B 35/626, C04B 35/645, B32B 18/00

(54) **PROCÉDÉ DE FABRICATION D'UNE PIÈCE EN MATÉRIAU COMPOSITE PAR SYNTHÈSE PAR RÉACTION AUTO-ENTRETENUE A HAUTE TEMPÉRATURE**
VERFAHREN ZUR HERSTELLUNG EINES TEILS AUS CMC BEI SHS SYNTHESE
PROCESS FOR THE FABRICATION OF A COMPOSITE BODY BY HIGH TEMPERATURE SELF PROPAGATING SYNTHESIS

(30) Priorité: 17.07.2014 FR 1456895
(43) Date de publication de la demande: 24.05.2017
(73) Titulaire: Safran Ceramics, 33185 Le Haillan (FR); Centre National de la Recherche Scientifique, 75016 Paris (FR)
(72) Inventeur: TAILLET, Brice, 26300 Pizançon (FR); PAILLER, René, 33610 Cestas (FR); TEYSSANDIER, Francis, 66140 Villelongue de la Salanque (FR); PHILIPPE, Eric, 33700 Merignac (FR); BOUILLON, Eric, 33185 Le Haillan (FR)
(74) Mandataire: Cabinet Beau de Loménie
(86) Numéro de dépôt international: PCT/FR2015/051943
(87) Numéro de publication internationale: WO 2016/009148

(56) Documents cités:
- EP-A1- 2 151 421
- WO-A1-92/13977
- WO-A2-01/53068
- WO-A2-01/53068
- JP-B2- H07 115 928
- US-A- 4 988 645
- KRZYSZTOF NAPLOCHA: "Combustion synthesis and development of TiOC aluminium composites", JOURNAL OF ALLOYS AND COMPOUNDS, ELSEVIER SEQUOIA, LAUSANNE, CH, vol. 509, no. 36, 24 mai 2011 (2011-05-24) , pages 8853-8861, XP028260593, ISSN: 0925-8388, DOI: 10.1016/J.JALLCOM.2011.05.092 [extrait le 2011-06-14]
- PRADEILLES ET AL: "Influence of thermal conditions on the combustion synthesis of Si"2N"2O phase", MATERIALS RESEARCH BULLETIN, ELSEVIER, KIDLINGTON, GB, vol. 43, no. 2, 20 December 2007 (2007-12-20), pages 463-472, XP022397785, ISSN: 0025-5408, DOI: 10.1016/J.MATERRESBULL.2007.02.032

## Description

### Arrière-plan de l'invention

L'invention concerne des procédés de fabrication de pièces en matériau composite à matrice céramique.

II est connu de protéger de l'oxydation des fibres à base de SiC revêtues d'une interphase de type PyC par une matrice carbure autocicatrisante assurant également une fonction mécanique de transfert de charge. La limite élastique de certains de ces matériaux peut être relativement faible, par exemple de l'ordre de 60MPa. Au-delà de la limite élastique, un réseau de fissuration peut se former dans la matrice lequel peut conduire à l'oxydation de l'interphase et des fibres. Le caractère autocicatrisant basé sur la formation de verres par oxydation de phases carbure dans le système SiBC permet à ces matériaux de fonctionner lorsqu'ils sont endommagés. Cependant, il peut être difficile de synthétiser des phases carbures oxydables à basse température. Par conséquent, certains de ces matériaux peuvent présenter une faiblesse aux alentours de 450°C du fait d'un compromis défavorable entre la cinétique d'oxydation du renfort structural (constitué des fibres et de l'interphase PyC) et la cinétique de production de verres cicatrisants. Ce fait peut limiter les performances de ces matériaux et, par conséquent, le choix des applications dans lesquelles ils peuvent être utilisés.

On connait, en outre, la fabrication de matériaux composites à matrice céramique par mise en œuvre de procédés d'infiltration à l'état fondu (procédés de « Melt-infiltration »). Ces procédés reposent sur le principe de la synthèse d'un matériau à forte limite élastique et forte conductivité thermique. Ce matériau peut comporter une interphase de BN (ou BN dopé au silicium) revêtue d'une phase carbure de type SiC et/ou d'une phase Si₃N₄, ces phases étant réalisées par voie gazeuse. La matrice est obtenue par introduction de charges carbure et/ou carbone dans une préforme fibreuse suivie d'une imprégnation par un alliage fondu à base de silicium, la réaction se produisant à une température minimum de 1420°C. Un tel procédé peut nécessiter d'utiliser des fibres thermostables par exemple telles que celles fournies sous la dénomination « Hi-Nicalon S » par la société japonaise NGS. Plus précisément, on distingue le procédé d'infiltration à l'état fondu où la charge introduite est uniquement du SiC du procédé d'infiltration réactive à l'état fondu où un mélange de charges comprenant du carbone est introduit, afin d'aboutir à une imprégnation réactive par l'alliage de silicium suivant la réaction Si + C -> SiC.

A part l'interphase BN qui peut donner lieu au verre B₂O₃, les matériaux obtenus par infiltration à l'état fondu peuvent ne pas posséder de système autocicatrisant en quantité suffisante pour un fonctionnement dans le domaine fissuré. En outre, de tels matériaux peuvent aussi présenter une limite de fonctionnement dans le domaine non fissuré notamment pour des pièces soumises à des sollicitations combinées complexes pendant des durées relativement longues. Par ailleurs, la protection contre l'oxydation conférée par l'interphase BN peut être assurée jusqu'aux alentours de 800°C, dans la mesure où la cinétique d'oxydation du BN reste faible dans ce domaine de température. Au-delà de cette température, l'oxydation du BN en B₂O₃ peut commencer à devenir significative et peut se traduire par une forte diminution de la durée de vie du matériau.

En outre, les matériaux obtenus par infiltration à l'état fondu peuvent également être sensibles au phénomène de corrosion humide.

De plus, une limitation des matériaux fabriqués par mise en œuvre de procédés d'infiltration à l'état fondu ou d'infiltration réactive à l'état fondu peut être due à la présence de silicium libre résiduel dans la matrice. Cela peut conduire à une limitation de la température d'utilisation des pièces concernées à environ 1300°C.

On connait aussi la formation de matrices céramiques par infiltration chimique en phase vapeur (« Chemical Vapor Infiltration » ou « CVI »). De tels procédés peuvent avoir l'inconvénient d'être relativement longs et couteux à mettre en œuvre. De la même manière, les procédés de densification par cycles d'imprégnation et de pyrolyse d'un polymère pour former une matrice densifiant une structure fibreuse peuvent nécessiter la réalisation de plusieurs cycles d'imprégnation et de pyrolyse afin d'obtenir une porosité satisfaisante. La réalisation d'une pluralité de cycles augmente la durée et le coût du procédé mis en œuvre.

On connait également WO 01/53068 qui divulgue un procédé de fabrication d'un matériau composite mettant en œuvre une étape d'extrusion. EP2151421 A1 divulgue la synthèse rapide de composites de carbone-carbure de silicium.

Il existe donc un besoin pour disposer de procédés de fabrication de pièces en matériau composite rapides et peu coûteux à mettre en œuvre et en particulier dans lesquels le recours au procédé d'infiltration chimique en phase vapeur pour former la matrice est limité.

Il existe aussi un besoin pour obtenir des matériaux composites à matrice céramique dont la matrice présente une faible teneur en silicium libre résiduel, la température d'utilisation de ces matériaux n'étant ainsi pas limitée à 1300°C.

Il existe aussi un besoin pour obtenir des matériaux composites à matrice céramique présentant une meilleure résistance à l'oxydation et à la corrosion que les matériaux composites ayant une matrice à base de SiC et de Si.

Il existe encore un besoin pour disposer de procédés de fabrication de pièces en matériau composite compatibles avec l'utilisation d'interphases PyC et BN et avec tous types de fibres de renfort.

### Objet et résumé de l'invention

A cet effet, l'invention propose, selon un premier aspect, un procédé selon la revendication 1.

Le procédé de synthèse par réaction auto-entretenue à haute température mis en œuvre dans le cadre de la présente invention est aussi connu en anglais sous le nom de « Self propagating High temperature Synthesis » (ou procédé « SHS »).

A la connaissance des inventeurs, un tel procédé n'a jamais été utilisé pour la fabrication de matériaux composites à matrice céramique comportant une structure fibreuse. Dans ce procédé, la réaction réalisée est suffisamment exothermique pour qu'elle s'auto-entretienne et qu'il y ait propagation auto-entretenue d'un front de réaction le long de la structure fibreuse. Un tel procédé est ainsi caractérisé par la propagation auto-entretenue d'une onde de chaleur le long de la structure fibreuse.

La mise en œuvre d'un procédé de synthèse par réaction auto-entretenue à haute température permet avantageusement d'obtenir des matériaux relativement purs en des temps de réaction particulièrement courts. Le procédé selon l'invention permet d'élaborer de manière relativement simple, peu coûteuse et rapide un matériau composite à matrice céramique. En particulier, par rapport à un procédé de densification par cycles d'imprégnation et de pyrolyse d'un polymère, le procédé de synthèse par réaction auto-entretenue à haute température peut avantageusement permettre d'obtenir une densification par une matrice en une seule étape alors que la densification par cycles d'imprégnation et de pyrolyse d'un polymère peut nécessiter la réalisation de plusieurs cycles d'imprégnation et de pyrolyse afin d'obtenir une porosité satisfaisante.

La synthèse par réaction auto-entretenue à haute température peut être initiée par un chauffage local par concentration d'énergie, par exemple par chauffage micro-ondes, par un laser, par une flamme, par un générateur HF ou un allumeur tel qu'une résistance, par placement de la structure fibreuse dans un four voire par une réaction chimique primaire exothermique. Une étincelle peut encore permettre d'initier la synthèse par réaction auto-entretenue à haute température. La mise en œuvre de ce type de procédé est relativement aisée car elle ne nécessite pas un apport d'énergie trop élevé par rapport aux procédés conventionnels de frittage.

La température au niveau du front de réaction peut être relativement élevée. La structure fibreuse n'est pas, pour autant, endommagée car le front de réaction se propage rapidement, ce qui permet de limiter la durée pendant laquelle les fibres, l'interphase ou les barrières de protection sont exposées à une température élevée. Ainsi, le procédé de synthèse par réaction auto-entretenue à haute température n'affecte pas les propriétés mécaniques de la structure fibreuse traitée.

Avantageusement, la matrice formée lors de l'étape a) peut avoir une porosité résiduelle inférieure ou égale à 25%.

L'expression « porosité résiduelle » désigne le rapport suivant : (volume occupé par l'ensemble des pores présents dans la pièce obtenue après l'étape a))/(volume total de la pièce obtenue après l'étape a)).

Avantageusement, la matrice formée lors de l'étape a) peut ne pas présenter de macropore.

Un pore définit une ouverture dans le matériau, l'ouverture ayant une longueur et une largeur. On appelle « macropore », un pore définissant une ouverture ayant une longueur supérieure ou égale à 500 µm et une largeur supérieure ou égale à 100 µm.

Ainsi, il peut ne subsister dans la matrice formée lors de l'étape a) que des pores dont la plus grande dimension varie entre quelques nanomètres et quelques centaines de nanomètres.

La porosité résiduelle de la matrice peut être mesurée par imprégnation ou porosimétrie à l'eau.

Il est donc avantageusement possible d'obtenir des matériaux composites à matrice céramique dont la matrice présente une porosité résiduelle limitée et notamment plus limitée que les matrices obtenues classiquement par mise en œuvre d'un procédé d'infiltration chimique en phase vapeur.

Une réaction chimique entre la composition pulvérulente et une phase gazeuse a lieu durant le procédé de synthèse par réaction auto-entretenue à haute température. La phase gazeuse comporte l'élément N, par exemple comporte du N₂. Le brevet décrit encore le cas où une réaction chimique uniquement entre les constituants de la composition pulvérulente a lieu durant le procédé de synthèse par réaction auto-entretenue à haute température. Des exemples illustrant ces deux types de procédés de synthèse par réaction auto-entretenue à haute température seront détaillés dans la suite.

Dans un exemple de réalisation, la structure fibreuse peut être présente durant tout ou partie de l'étape a) dans un volume maintenu à une température inférieure ou égale à 2000 °C, par exemple inférieure ou égale à 1500°C, de préférence inférieure à la température de dégradation des fibres mises en œuvre.

Dans un exemple de réalisation, la composition pulvérulente peut être introduite dans la porosité de la structure fibreuse avant l'étape a).

En variante, la composition pulvérulente peut être formée avant l'étape a) directement dans la porosité de la structure fibreuse par transformation d'une composition précurseur introduite au préalable dans la porosité de la structure fibreuse.

La transformation de la composition précurseur est avantageusement une transformation chimique.

La composition précurseur peut être sous la forme d'une poudre. En variante, la composition précurseur peut comporter un polymère, le polymère étant pyrolysé avant l'étape a) pour former tout ou partie de la composition pulvérulente dans la porosité de la structure fibreuse. Le polymère peut être un polymère chargé. Le polymère peut être un polycarbosilane ou un polysiloxane éventuellement chargé.

De préférence, les grains de la composition pulvérulente peuvent avoir une taille médiane inférieure ou égale à 1,5 µm.

Sauf mention contraire, par « taille médiane », on désigne la dimension donnée par la distribution granulométrique statistique à la moitié de la population, dite D50.

De telles tailles pour les grains des poudres utilisées permettent avantageusement d'améliorer encore le remplissage des pores de la structure fibreuse ainsi que la réactivité des poudres lors de l'étape a).

La taille médiane des grains de la composition pulvérulente peut typiquement être comprise entre quelques nanomètres et quelques micromètres, de préférence entre 0,5 µm et 1,5 µm. Les grains de la composition pulvérulente peuvent, par exemple, avoir une taille médiane comprise entre 200 nm et 1 µm, par exemple entre 200 nm et 800 nm.

Dans un exemple de réalisation, la structure fibreuse peut comporter des fibres de carbone et/ou des fibres céramiques.

Les fibres céramiques peuvent comporter des fibres de type nitrure, des fibres de type carbure, par exemple de SiC, des fibres de type oxyde et des mélanges de telles fibres.

Dans un exemple de réalisation, les fibres de la structure fibreuse peuvent être revêtues d'un revêtement d'interphase.

Le revêtement d'interphase peut comporter, notamment consister en, du PyC, du BC ou du BN.

Avantageusement, on peut réaliser avant l'étape a) une étape b) de densification préliminaire de la structure fibreuse par un procédé différent du procédé de synthèse par réaction auto-entretenue à haute température.

La densification préliminaire peut permettre d'obtenir une structure fibreuse présentant, avant l'étape a), une porosité comprise entre 20 % et 80%, de préférence entre 35 % et 55%.

Par « porosité », il faut comprendre le rapport suivant : (volume occupé par l'ensemble des pores de la structure fibreuse)/(volume total de la structure fibreuse).

En alternative ou en combinaison, une étape c) de densification complémentaire de la pièce peut être réalisée après l'étape a).

La densification préliminaire et/ou complémentaire peut être réalisée par infiltration chimique en phase vapeur et/ou par cycles d'imprégnation et de pyrolyse d'un polymère.

Il peut être avantageux d'effectuer une densification préliminaire avant l'étape a) de préférence par infiltration chimique en phase vapeur. Une telle densification préliminaire permet de former un revêtement de consolidation liant les fibres entre elles et permettant à la structure consolidée de conserver seule sa forme sans assistance d'un outillage de maintien. La réalisation d'une telle densification préliminaire avant l'étape a) permet en outre d'améliorer encore la résistance des fibres au procédé de synthèse par réaction auto-entretenue à haute température.

Dans un exemple de réalisation, les étapes suivantes peuvent être réalisées avant l'étape a) :
- introduction dans la porosité de la structure fibreuse d'au moins une première poudre, par exemple d'un premier mélange de poudres, puis
- introduction dans la porosité de la structure fibreuse d'au moins une seconde poudre différente de la première, par exemple d'un second mélange de poudres différent du premier mélange de poudres,
une matrice céramique dont la composition évolue lorsque l'on se déplace vers une surface externe de la pièce pouvant être obtenue après l'étape a).

Un tel exemple de réalisation permet avantageusement de créer des gradients de composition en surface notamment afin de définir une protection externe, par exemple une barrière thermique et/ou environnementale. Dans ce cas, on obtient après l'étape a) une pièce dans laquelle une barrière thermique et/ou environnementale définit tout ou partie d'une surface externe de la pièce.

La première poudre ou le premier mélange de poudres peut participer à la synthèse par réaction auto-entretenue à haute température ou en variante constituer une composition précurseur de la composition pulvérulente participant à la synthèse par réaction auto-entretenue à haute température.

Le(s) constituant(s) de la seconde poudre ou du second mélange de poudres peuvent ou non participer à une réaction chimique durant l'étape a). La seconde poudre ou le second mélange de poudres peut, par exemple, comporter un silicate de terre rare, comportant par exemple de l'yttrium.

Dans un exemple de réalisation, le procédé peut, en outre, comporter une étape de formation d'une barrière environnementale et/ou thermique, la barrière environnementale et/ou thermique étant présente, après l'étape a), le long de tout ou partie d'une surface externe de la pièce.

Dans un exemple de réalisation, la barrière environnementale et/ou thermique peut être formée après mise en œuvre de l'étape a). Dans ce cas, la barrière environnementale et/ou thermique forme un revêtement recouvrant tout ou partie de la surface externe de la pièce. En variante, la barrière environnementale et/ou thermique peut être formée pendant l'étape a). Dans ce cas, la barrière environnementale et/ou thermique définit tout ou partie de la surface externe de la pièce. Dans ce cas, la barrière environnementale et/ou thermique résulte de la présence avant l'étape a) d'une seconde poudre ou d'un second mélange de poudres dans la porosité de la structure fibreuse.

La matrice formée lors de l'étape a) comporte majoritairement en masse du Si₂N₂O formé par synthèse par réaction auto-entretenue à haute température par réaction chimique entre une poudre de silicium, une poudre de silice et une phase gazeuse comportant l'élément N

Par « la matrice comporte majoritairement en masse du X », il faut comprendre que le composé X est présent dans la matrice en une teneur massique supérieure à 50%, de préférence supérieure ou égale à 60%, de préférence supérieure ou égale à 70%.

Il est avantageux de former une matrice à base de Si₂N₂O car ce matériau présente une excellente tenue à l'oxydation (supérieure à celle du SiC) et confère aux pièces formées une très bonne résistance à la corrosion humide. Le Si₂N₂O présente, en outre, une bonne thermostabilité, une faible densité ainsi que de bonnes propriétés mécaniques.

Les méthodes connues pour former le Si₂N₂O peuvent mettre en œuvre des températures de traitement supérieures à 1700°C ainsi que des pressions élevées, ces conditions opératoires étant incompatibles avec le traitement d'une préforme fibreuse. En effet, la synthèse de Si₂N₂O par pressage isostatique à chaud (procédé de « Hot Isostatic Pressing » ou « HIP ») par exemple est incompatible avec l'emploi de fibres de SiC de type « Hi-Nicalon S », la température de réaction pouvant atteindre 1950°C. En outre, le temps de réaction dans un procédé de pressage isostatique à chaud peut être significativement plus long que le temps de réaction dans un procédé de synthèse par réaction auto-entretenue à haute température.

Ainsi, un des avantages de l'invention associé à l'utilisation d'un procédé de synthèse par réaction auto-entretenue à haute température est de permettre de former du Si₂N₂O rapidement et sans endommager la structure fibreuse traitée.

Le procédé selon l'invention permet avantageusement d'obtenir une pièce en matériau composite à matrice céramique pouvant être utilisée jusqu'à au moins 1450°C, voire jusqu'à 1800°C, à la différence des pièces dont la matrice est formée par infiltration à l'état fondu ou par densification par cycles d'imprégnation et de pyrolyse d'un polymère dont l'utilisation peut être limitée à des températures inférieures à 1300°C du fait de la présence significative de silicium libre résiduel dans la matrice.

Ainsi, avantageusement, la matrice formée lors de l'étape a) peut présenter une teneur massique en silicium libre résiduel inférieure ou égale à 5%.

Les teneurs massiques des différents constituants présents dans la matrice, par exemple le Si₂N₂O, le silicium libre résiduel et les composés α-Si₃N₄ et β-Si₃N₄ peuvent être quantifiées par diffraction des rayons X (DRX). L'analyse DRX est effectuée sur un échantillon de la matrice prélevé dans l'épaisseur et au centre de la pièce obtenue par le procédé selon l'invention.

La formation d'une matrice de Si₂N₂O par synthèse par réaction auto-entretenue à haute température est particulièrement avantageuse par rapport à la formation de matrices de Si₂N₂O par procédés de densification par cycles d'imprégnation et de pyrolyse d'un polymère (« PIP »). En effet, les matrices de Si₂N₂O formées par ces dernières méthodes peuvent, du fait de la réalisation de plusieurs cycles successifs, ne pas présenter une pureté et/ou une homogénéité satisfaisantes. La formation de Si₂N₂O par des procédés de densification par cycles d'imprégnation et de pyrolyse d'un polymère peut, en outre, résulter en l'obtention de Si₂N₂O amorphe alors que le procédé de synthèse par réaction auto-entretenue à haute température permet d'obtenir une quantité significative de Si₂N₂O cristallin. La formation de Si₂N₂O par synthèse par réaction auto-entretenue à haute température peut ainsi avantageusement permettre d'éviter de devoir recourir à un traitement thermique additionnel pour transformer le Si₂N₂O amorphe en Si₂N₂O cristallin, lequel traitement thermique peut conduire à une dégradation des fibres.

On peut toutefois après l'étape a) effectuer un traitement thermique afin d'augmenter la cristallisation du Si₂N₂O et/ou faire croître la taille des grains de Si₂N₂O obtenus.

Avantageusement, la matrice obtenue après mise en œuvre de l'étape a) peut comporter une phase de Si₂N₂O cristallin en une teneur massique supérieure ou égale à 70%.

On peut former le Si₂N₂O par mise en œuvre de la réaction chimique suivante durant l'étape a) :

3Si ₍ₛ₎ + SiO_{2 (s)} + 2N₂ (g) → 2Si₂N₂O ₍ₛ₎

Dans un exemple de réalisation, la phase gazeuse peut, en outre, comporter du O₂ et/ou du N₂O.

L'introduction d'une pression partielle de O₂ et/ou de N₂O dans la phase gazeuse permet avantageusement d'augmenter la proportion de Si₂N₂O formé lors de l'étape a) et de réduire la proportion des autres composés qui peuvent être formés lors de l'étape a) comme le Si₃N₄.

Selon l'invention, une poudre de silicium est introduite dans la porosité de la structure fibreuse avant l'étape a) et un traitement d'oxydation partielle de la poudre de silicium est réalisé avant l'étape a), ce traitement d'oxydation partielle permettant de convertir tout ou partie de la poudre de silicium en silice. Cet exemple de réalisation correspond à l'introduction dans la porosité de la structure fibreuse avant l'étape a) d'une composition précurseur comportant du silicium. En particulier, le silicium peut être présent dans la composition précurseur introduite en une teneur massique comprise entre 58% et 100%.

Un tel prétraitement d'oxydation permet avantageusement de réduire la quantité de Si₃N₄ formée durant l'étape a). En effet, une couche de silice se forme autour des particules de silicium lors du prétraitement d'oxydation. Sous pression d'azote, le silicium, ainsi protégé, se nitrure moins facilement et la formation de Si₂N₂O est favorisée par rapport à la formation de Si₃N₄.

Par rapport au cas où aucun prétraitement d'oxydation n'est réalisé, cet exemple de réalisation dans lequel il y a formation *in situ* de silice suite au prétraitement d'oxydation peut aussi permettre de diminuer encore la porosité résiduelle de la pièce obtenue après mise en œuvre de l'étape a).

Dans un exemple de réalisation, le rapport (quantité de matière de la poudre de silicium avant initiation de la synthèse par réaction auto-entretenue à haute température)/(quantité de matière de la poudre de silice avant initiation de la synthèse par réaction auto-entretenue à haute température) peut être supérieur ou égal à 3, par exemple être compris entre 3 et 3,5.

En particulier, le rapport (quantité de matière de la poudre de silicium avant initiation de la synthèse par réaction auto-entretenue à haute température)/(quantité de matière de la poudre de silice avant initiation de la synthèse par réaction auto-entretenue à haute température) peut être sensiblement égal à 3. Dans un tel mélange Si-SiO₂, la teneur massique en silicium est de 58%.

Lorsqu'une phase gazeuse est mise en œuvre durant le procédé de synthèse par réaction auto-entretenue à haute température, la pression de la phase gazeuse peut, durant tout ou partie de l'étape a), être comprise entre 10 bars et 50 bars, de préférence entre 20 bars et 30 bars.

Avantageusement, une phase de montée en température à une vitesse de chauffage moyenne supérieure ou égale à 90°C/minute est réalisée avant l'étape a).

De telles valeurs de vitesse de chauffage permettent avantageusement de favoriser la formation de Si₂N₂O par rapport à la formation de Si₃N₄.

De préférence, une poudre comportant du bore peut être présente dans la porosité de la structure fibreuse avant l'étape a), la poudre comportant du bore pouvant former durant l'étape a) une phase de BN par réaction de nitruration avec la phase gazeuse.

L'ajout de bore au mélange Si/SiO₂ permet de favoriser la densification du matériau composite. En effet, la nitruration du bore (formation de BN) entraine une augmentation de son volume de 140%. La matrice comporte dans ce cas du Si₂N₂O, du BN et éventuellement du Si₃N₄.

En particulier, la poudre comportant du bore peut être une poudre de bore.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est un ordinogramme d'un exemple de procédé selon l'invention,
- les figures 2 et 3 sont des ordinogrammes de variantes de procédés selon l'invention,
- les figures 4 à 6 sont des ordinogrammes plus détaillés d'exemples de procédés selon l'invention,
- les figures 7 et 8 sont des clichés obtenus par microscopie électronique à balayage d'une pièce en matériau composite formée par mise en œuvre d'un exemple de procédé selon l'invention, et
- la figure 9 est un cliché obtenu par microscopie électronique à balayage d'une pièce en matériau composite formée par mise en œuvre d'un autre exemple de procédé selon l'invention.

### Description détaillée de modes de réalisation

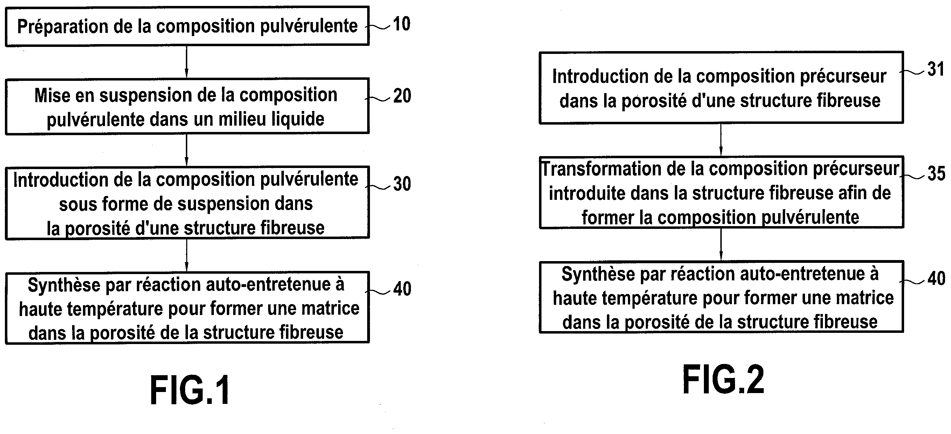

On a représenté à la figure 1 une succession d'étapes d'un procédé selon l'invention. Une composition pulvérulente est tout d'abord préparée (étape 10). Cette composition pulvérulente peut comporter un mélange d'une poudre de Si et d'une poudre de SiO₂ lorsque l'on cherche à obtenir une matrice à base de Si₂N₂O.

Le mélange préparé à l'étape 10 est ensuite mis en suspension dans un milieu liquide, par exemple dans de l'eau (étape 20). Lorsque l'on cherche à obtenir une matrice à base de Si₂N₂O, les poudres de silicium et de silice peuvent être présentes dans le milieu liquide en une teneur volumique (somme de la teneur volumique de la poudre de silicium et de la teneur volumique de la poudre de silice) supérieure ou égale à 15%, par exemple comprise entre 15% et 25%.

La composition pulvérulente en suspension dans le milieu liquide est ensuite introduite dans la porosité d'une structure fibreuse, par exemple par un procédé de type aspiration de poudres submicroniques (APS) (étape 30).

Une synthèse par réaction auto-entretenue à haute température permettant de former une matrice dans la porosité de la structure fibreuse est ensuite réalisée (étape 40). Durant tout ou partie de l'étape a), la structure fibreuse peut être présente dans un volume maintenu à une température inférieure ou égale à 1500°C, par exemple inférieure ou égale à 1450°C.

La figure 2 est un ordinogramme montrant une variante de réalisation d'un procédé selon l'invention.

Dans une première étape 31, on introduit dans la porosité d'une structure fibreuse une composition précurseur. La composition précurseur peut, par exemple, comporter un polymère destiné à être pyrolysé pour former la composition pulvérulente. En variante, la composition précurseur est sous la forme d'une poudre, par exemple d'une poudre de silicium lorsque l'on cherche à obtenir une matrice à base de Si₂N₂O.

On réalise ensuite une transformation de la composition précurseur en composition pulvérulente (étape 35). Par exemple, lorsque la composition précurseur comporte une poudre de silicium, un traitement d'oxydation de cette poudre de silicium peut être réalisé afin d'obtenir une composition pulvérulente comportant une poudre de silice et une poudre de silicium destinée à former une matrice à base de Si₂N₂O par synthèse par réaction auto-entretenue à haute température. Le traitement thermique mis en œuvre pour transformer une partie de la poudre de silicium en silice comporte, par exemple, la soumission de la poudre de silicium à une température de 900°C pendant 1h sous air. En variante, lorsque la composition précurseur comporte un polymère, l'étape 35 peut comporter un traitement thermique permettant de pyrolyser ledit polymère afin d'obtenir la composition pulvérulente.

Une synthèse par réaction auto-entretenue à haute température permettant de former une matrice dans la porosité de la structure fibreuse est ensuite réalisée (étape 40).

Dans le cas où l'on cherche à obtenir une matrice de Si₂N₂O, le fait d'utiliser une composition précurseur sous la forme d'une poudre de silicium et de la transformer en partie en silice directement dans la structure fibreuse permet d'obtenir une meilleure densification. Cette transformation permet d'obtenir un meilleur remplissage de la porosité de la structure fibreuse après oxydation partielle de la poudre de silicium. Par exemple, si une poudre de silicium est introduite par APS de manière à combler 55% de la porosité d'une structure fibreuse, il est possible d'obtenir, après oxydation, un remplissage de 68% de la porosité de la structure fibreuse. Grâce à la formation de silice *in situ,* il est ainsi possible d'obtenir après l'étape a) une matrice présentant une porosité résiduelle particulièrement réduite.

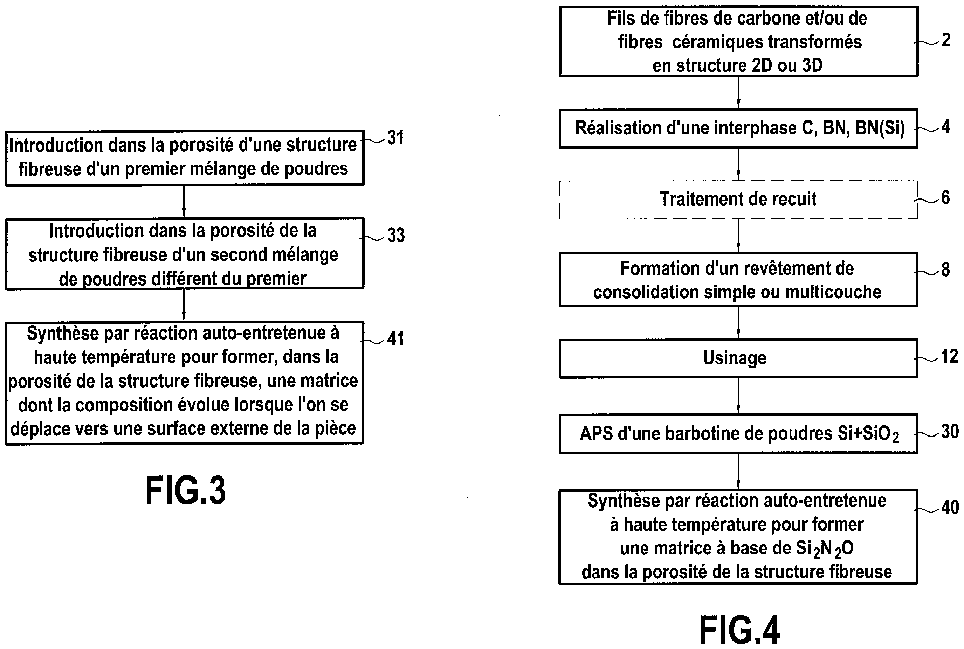

On a représenté à la figure 3 un ordinogramme montrant une variante de réalisation d'un procédé selon l'invention. Durant l'étape 32, un premier mélange de poudres est introduit dans la porosité de la structure fibreuse. Dans un deuxième temps, un second mélange de poudres différent du premier est introduit dans la structure fibreuse (étape 33). Du fait de l'introduction préalable du premier mélange de poudres, la quantité du second mélange de poudres présente dans la structure fibreuse diminue avec la profondeur au sein de la structure fibreuse. Du fait de cette variation, il va être possible d'obtenir après l'étape 41 une matrice céramique dont la composition évolue lorsque l'on se déplace vers une surface externe de la pièce. Dans ce cas, on peut avantageusement former après l'étape a) une barrière environnementale et/ou thermique définissant tout ou partie de la surface externe de la pièce. Une telle variante de procédé présente, par conséquent, l'avantage de permettre, en une seule étape, à la fois la densification de la structure fibreuse et la formation d'une barrière environnementale et/ou thermique.

On va décrire aux figures 4 à 6 quelques exemples de successions d'étapes qui peuvent être réalisées dans le cadre de l'invention dans le cas où l'on cherche à obtenir une matrice à base de Si₂N₂O. Seul le cas de la formation d'une matrice à base de Si₂N₂O est abordé dans ces figures dans un souci de concision, étant entendu que l'invention n'est pas limitée à la formation de matrices à base de Si₂N₂O comme déjà expliqué plus haut.

On a représenté à la figure 4 la succession d'étapes d'un exemple de procédé selon l'invention. Lors de l'étape 2, une pluralité de fils sont transformés en une structure fibreuse par exemple 2D ou 3D. On peut utiliser pour ce faire tout procédé connu de l'homme du métier.

Les fils 1 mis en œuvre comportent une pluralité de fibres céramiques et/ou de carbone. Les fibres céramiques sont par exemple des fibres de SiC. Les fibres SiC utilisables sont, par exemple, fournies sous la dénomination « Nicalon », « Hi-Nicalon » ou « Hi-Nicalon-S » par la société japonaise NGS ou « Tyranno SA3 » par la société UBE. Les fibres de carbone utilisables sont, par exemple, fournies sous la dénomination « Torayca » par la société Toray.

On réalise ensuite une interphase sur les fils (étape 4). L'interphase permet avantageusement d'accroître la résistance mécanique du matériau composite à matrice céramique en permettant notamment une déviation des fissures éventuelles de la matrice afin que celles-ci n'affectent pas l'intégrité des fibres. Dans une variante, les fibres ne sont pas revêtues d'une interphase. Un traitement de recuit peut ensuite être réalisé (étape 6 laquelle est optionnelle dans l'exemple de procédé décrit).

Durant l'étape 8, un revêtement de consolidation est formé sur les fibres. La structure fibreuse peut, pour ce faire, être placée dans un conformateur et le revêtement de consolidation peut être formé par infiltration chimique en phase vapeur. Le revêtement de consolidation comporte par exemple un carbure, le revêtement de consolidation étant par exemple en SiC, B₄C et/ou SiBC. Le revêtement de consolidation peut constituer une barrière chimique et/ou thermique permettant de protéger les fibres et l'interphase (si elle est présente) de dégradations éventuelles.

Une étape d'usinage de la structure fibreuse peut ensuite être réalisée (étape 12). Après cette étape d'usinage, la composition pulvérulente présente sous forme de suspension dans un milieu liquide est introduite dans la structure fibreuse par un procédé d'aspiration de poudres sub-microniques (étape 30). Une synthèse par réaction auto-entretenue à haute température est ensuite réalisée pour former la matrice à base de Si₂N₂O (étape 40).

Comme mentionné plus haut, le Si₂N₂O présente de nombreux avantages. En particulier, ce matériau présente une résistance à l'oxydation supérieure à celle du SiC (température de début d'oxydation : 1600°C sous air sec). Les propriétés mécaniques du matériau Si₂N₂O sont, par ailleurs, compatibles avec son association dans la pièce formée avec des fibres de SiC (par exemple de type « Hi-Nicalon S »), d'une part, et avec une phase de Si₃N₄ d'autre part (voir tableau 1 ci-dessous).

**Tableau 1**

| | **Si₂N₂O** | **Si₃N₄** | **SiC** |
|---|---|---|---|
| **Module d'Young (GPa)** | 230 | 320 | 400 |
| **Densité** | 2,81 | 3,27 | 3,20 |
| **Coefficient de dilatation (K⁻¹)** | 3,5.10⁻⁶ | 3,6.10⁻⁶ | 5.10⁻⁶ |

Lorsque la matrice formée lors de l'étape a) comporte une phase majoritaire de Si₂N₂O, on peut former dans la matrice d'autres composés que le Si₂N₂O comme du Si₃N₄. La teneur massique en Si₃N₄ dans la matrice formée lors de l'étape a) est inférieure à 50%, de préférence inférieure ou égale à 5%.

On donne ci-dessous quelques exemples de structures qui peuvent être formées par un procédé selon l'invention :
- Fibres SiC/Interphase PyC/consolidation SiC ou Si₃N₄/matrice comportant du Si₂N₂O formée par synthèse par réaction auto-entretenue à haute température à partir d'un mélange de poudres de Si et de SiO₂ sous pression d'azote,
- Fibres SiC/Interphase PyC/consolidation SiC ou Si₃N₄/matrice comportant du Si₂N₂O et un composé de formule SiₓB_{y} formée par synthèse par réaction auto-entretenue à haute température à partir d'un mélange de poudres de Si, SiO₂ et de B sous pression d'azote,
- Fibres SiC/Interphase PyC/consolidation SiC ou Si₃N₄/matrice comportant du Si₂N₂O et du SiAlON formée par synthèse par réaction auto-entretenue à haute température à partir d'un mélange de poudres de Si, SiO₂ et de Al sous pression d'azote.

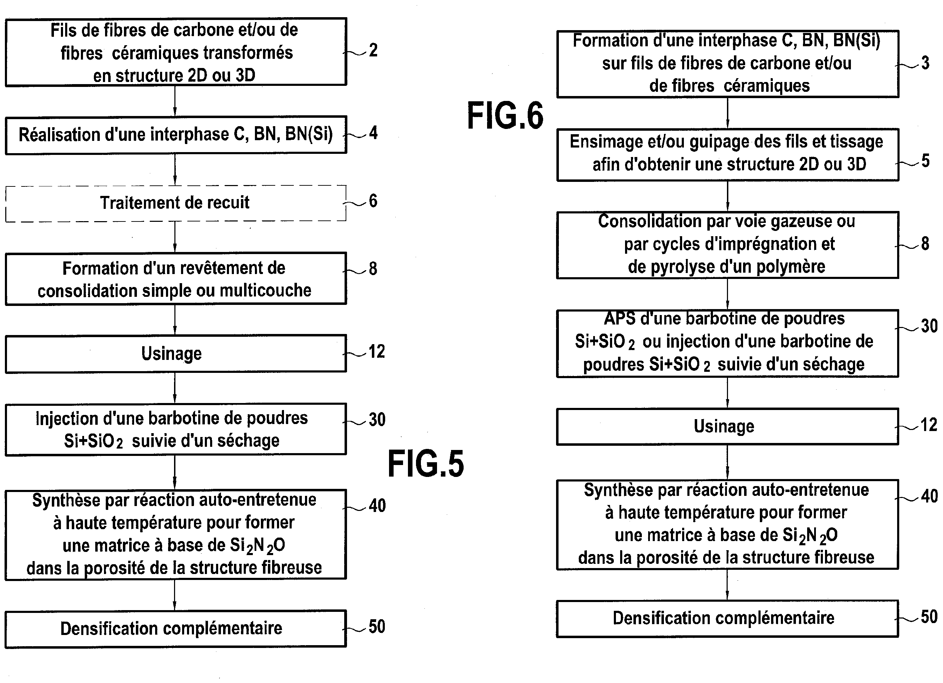

On a représenté à la figure 5, une variante de procédé selon l'invention. La succession d'étapes de la figure 5 diffère de celle de la figure 4 au niveau de la méthode mise en œuvre pour introduire la composition pulvérulente dans la structure fibreuse et du fait de la réalisation d'un post-traitement après l'étape a).

Dans l'exemple de la figure 5, la composition pulvérulente sous forme de suspension aqueuse est introduite par injection dans la structure fibreuse, un traitement thermique étant ensuite effectué pour faire évaporer l'eau. L'injection et le traitement thermique réalisés peuvent être du même type que ceux mis en œuvre dans des procédés de moulage par injection de résine (procédés de « Resin Transfer Molding » ou « RTM »). On peut utiliser d'autres procédés connus de l'homme du métier pour introduire la composition pulvérulente dans la structure fibreuse, on peut ainsi par exemple introduire la composition pulvérulente dans la structure fibreuse par électrophorèse.

Une fois la synthèse par réaction auto-entretenue à haute température réalisée, une étape c) de densification complémentaire peut être réalisée par exemple par cycles d'imprégnation et de pyrolyse d'un polymère afin de combler la porosité résiduelle de la matrice formée (étape 50). En variante, durant l'étape 50, un traitement complémentaire de densification de frittage flash (SPS, « Spark Plasma Sintering ») peut être réalisé afin d'accroître la densité finale de la pièce.

On a représenté à la figure 6 la succession d'étapes d'un autre exemple de procédé selon l'invention. Dans cet exemple, une interphase est d'abord formée sur les fils avant formation de la structure fibreuse (étape 3). On réalise ensuite un traitement d'ensimage et/ou de guipage des fils puis une opération textile comme un tissage afin d'obtenir la structure fibreuse (étape 5). La composition pulvérulente est ensuite introduite dans la structure fibreuse, une matrice est formée par synthèse par réaction auto-entretenue à haute température puis une densification complémentaire est réalisée comme expliqué ci-dessus.

### Exemples

### Exemple 1 : formation d'une matrice comportant une phase de Si₂N₂O à partir de poudres de silicium et de silice (selon l'invention)

La séquence des différentes étapes d'un procédé selon l'invention est détaillée ci-dessous.

Un broyage séparé par attrition de poudres commerciales de silicium et de silice a tout d'abord été réalisé. Des poudres de silice et de silicium commercialisées par la société Sigma-Aldrich ont été utilisées. La poudre de silice utilisée présentait avant broyage une taille médiane (D50) de grains égale à 2,1µm et la poudre de silicium utilisée présentait avant broyage une taille médiane (D50) de grains égale à 11µm.

Le broyage a permis d'ajuster la granulométrie des poudres de silice et de silicium. Après broyage, la taille médiane (D50) des grains de la poudre de silice était de 600nm environ et la taille médiane (D50) des grains de la poudre de de silicium était de 400 nm environ.

Un traitement thermique à 600°C pendant 6 heures sous air de la poudre de silicium a ensuite été effectué afin d'améliorer sa mouillabilité.

Une suspension aqueuse stable chargée par les poudres à 20% en volume a ensuite été préparée. Cette suspension présentait un pH compris entre 9 et 9,5 et était stabilisée par l'ajout d'hydroxyde de tétraméthylammonium (TMAH). Le rapport molaire Si/SiO₂ dans la suspension était d'environ 3.

Une préforme fibreuse a ensuite été imprégnée par un procédé d'aspiration de poudres sub-microniques sous une pression de 4 bars et avec application d'un vide pendant 2 heures. La préforme fibreuse utilisée comportait une pluralité de fibres de SiC commercialisées sous le nom « Hi-Nicalon-S », revêtues d'une interphase de PyC d'une épaisseur de 100nm et d'un revêtement de consolidation de SiC d'épaisseur 1 µm. La préforme fibreuse utilisée avait une porosité initiale de 54% (résultat obtenu par trois mesures différentes fournissant des valeurs similaires : par pycnométrie hélium, par imprégnation à l'eau et par porosimétrie mercure).

Une fois les poudres introduites dans la préforme fibreuse, le traitement thermique sous pression suivant permettant de réaliser une synthèse par réaction auto-entretenue à haute température (procédé « SHS ») a été effectué :
∘ montée en température à 250°C/minute jusqu'à la température de 1400°C par chauffage à effet Joule,
∘ palier de 30 minutes à 1400°C sous 20 bars d'azote, et
∘ refroidissement contrôlé jusqu'à température ambiante.

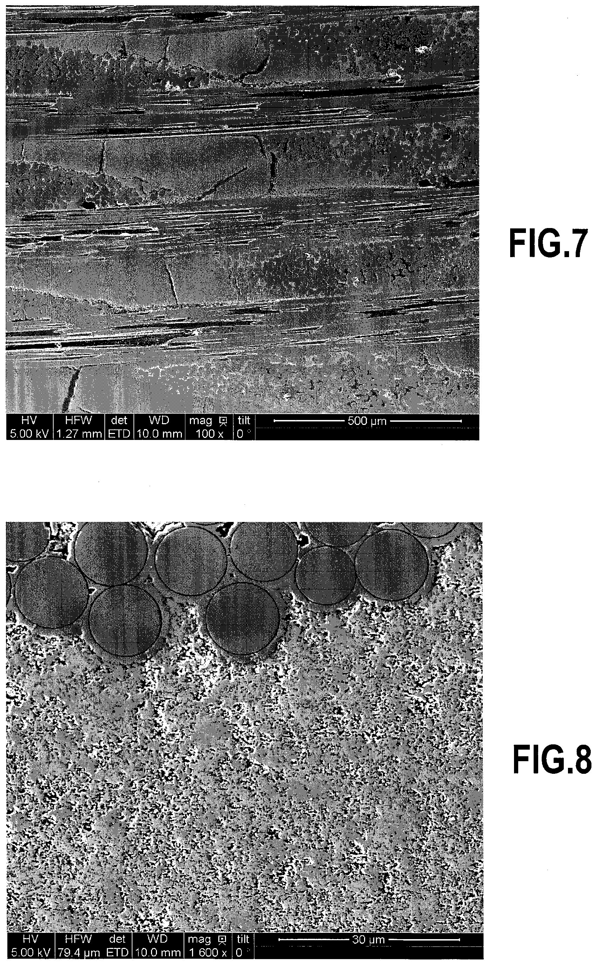

Après mise en œuvre d'un tel protocole, les résultats donnés aux figures 7 et 8 ont été obtenus. Un remplissage efficace et homogène de la porosité de la structure fibreuse par la matrice a été obtenu. Les fibres, l'interphase et le revêtement de consolidation n'ont pas été endommagés par la synthèse par réaction auto-entretenue à haute température.

Après analyse par DRX, on obtient les résultats suivants pour la composition de la matrice : 75% en masse de Si₂N₂O cristallin, présence de phases α-Si₃N₄ et β-Si₃N₄ et teneur massique en silicium libre résiduel dans la matrice inférieure ou égale à 5%. La porosité résiduelle du matériau obtenue est d'environ 23% (mesurée par immersion dans l'eau).

L'étape d'imprégnation de la préforme par aspiration de poudres submicronique (APS) suivi de la synthèse par réaction auto-entretenue à haute température ont permis de combler environ 55% de la porosité initiale.

### Exemple 2 : formation d'une matrice comportant une phase de Si₂N₂O avec mise en œuvre d'un pré-traitement d'oxydation partielle avant l'étape a) (selon l'invention)

La séquence des différentes étapes d'un autre exemple de procédé selon l'invention est détaillée ci-dessous :
1/ Broyage de poudres de SiO₂ sous eau et de Si sous isopropanol/éthanol. Les poudres ont un diamètre médian compris entre 0,5 µm et 1µm.
2/ Traitement thermique à 600°C pendant 6 heures sous air de la poudre de silicium.
3/ Obtention d'un mélange de poudres, constitué de 73% en masse de Si et 27% en masse de SiO₂, soit un rapport molaire Si/SiO₂ = 5,77.
4/ Mise en suspension des poudres dans de l'eau, la suspension étant stabilisée à pH 9 avec du TMAH et présentant un taux de matière sèche de 20% en volume.
5/ Imprégnation par APS (4bar/vide pendant 2 heures) dans une structure fibreuse composée de fibres céramiques, revêtues d'une interphase de pyrocarbone et d'une consolidation SiC.
6/ Séchage du matériau à 100°C pendant une nuit.
7/ Traitement thermique d'oxydation de la poudre de silicium après l'étape d'APS : 1 heure à 900°C sous air.
8/ Traitement thermique par synthèse par réaction auto-entretenue à haute température : montée jusqu'à 1450°C à la vitesse de 200°C/min sous 20bar de diazote. Palier en température de 10min. Refroidissement contrôlé jusqu'à la température ambiante.

La matrice est composée de 86% en masse de Si₂N₂O cristallin, de 12% en masse de Si₃N₄ et de 2% en masse de Si.

La porosité résiduelle est d'environ 17%.

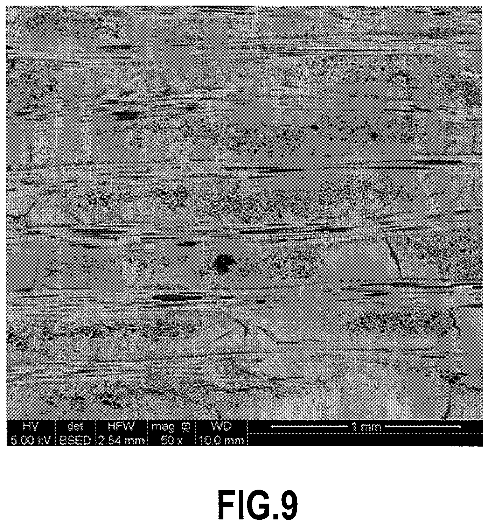

La matrice est homogène et dense (voir figure 9) et la porosité résiduelle du matériau obtenu est encore inférieure à celle du matériau obtenu selon l'exemple 1.

### Exemple 3 : formation d'une matrice comportant une phase de Si₂N₂O à partir de poudres de silicium, de silice et de bore (selon l'invention)

La séquence des différentes étapes d'un autre exemple de procédé selon l'invention est détaillée ci-dessous :
1/ Broyage séparé des poudres de Si et B sous isopropanol/ éthanol, et de SiO₂ dans de l'eau distillée
2/ Traitement thermique à 600°C sous air de la poudre de silicium pour favoriser sa mise en suspension
3/ Mélange des poudres selon la composition massique suivante : Si/SiO2 = 1,4 + 10% de B
4/ Mise en suspension aqueuse (taux de matière sèche compris entre 15 et 20% en volume). Le contrôle du pH s'effectue par l'ajout d'une base forte, le TMAH
5/ Imprégnation par APS dans une préforme fibreuse
6/ Séchage
7/ Traitement thermique par procédé de synthèse par réaction auto-entretenue à haute température : montée jusqu'à 1450°C à une vitesse de 200°C/min sous 20 ou 30bar de diazote. Palier en température de 10min. Refroidissement contrôlé jusqu'à température ambiante.

### Exemple 4 : formation d'une matrice comportant des phases de TiN et de TiB₂ (hors invention)

La séquence des différentes étapes d'un autre exemple de procédé selon l'invention est détaillée ci-dessous :
1/ Mélange de poudres commerciales de Ti et BN selon la composition suivante : BN/Ti = 1 (rapport molaire) soit BN/Ti = 0,52 (rapport massique). Les grains des poudres utilisées ont un diamètre médian compris entre 0,5 µm et 1 µm
2/ Mise en suspension des poudres dans de l'éthanol et ajout à raison de 2 mg/m² de PEI (polyethylèneimine) en tant que dispersant stérique. Le taux de matière sèche de la suspension est compris entre 15 % et 20% en volume
3/ Imprégnation par APS (4bar/vide) dans une structure fibreuse composée de fibres céramiques, revêtues d'une interphase de pyrocarbone et d'une consolidation SiC
4/ Séchage
5/ Traitement thermique par procédé de synthèse par réaction auto-entretenue à haute température : montée jusqu'à 950°C à une vitesse de 200°C/min sous 40bar de diazote. Refroidissement contrôlé jusqu'à température ambiante.

BN, Ti et N₂ réagissent à l'intérieur de la porosité de la structure fibreuse afin d'obtenir une matrice à base de TiB₂ et de TiN, selon la réaction suivante :

yTi ₍ₛ₎ + xBN ₍ₛ₎ + 0,5 (y-1,5x)N_{2 (g)} → 0,5xTiB_{2 (s)} + (y-0,5x)TiN ₍ₛ₎

On obtient par ce procédé une matrice comportant à 55% en masse du TiB₂ et à 35% en masse du TiN. La température maximale de combustion reste inférieure à 1500°C.

### Exemple 5 : formation d'une matrice comportant des phases de TiC et de SiC (hors invention)

La séquence des différentes étapes d'un autre exemple de procédé selon l'invention est détaillée ci-dessous :
1/ Broyage de la poudre de silicium sous isopropanol/éthanol. La poudre a un diamètre médian compris entre 0,5 µm et 1µm
2/ Mélange de poudres afin d'obtenir un mélange constitué à 48% en masse de Ti (poudre de titane commerciale), à 28% en masse de Si et à 24% en masse de C (Luvomax 0,8 microns)
3/ Mise en suspension dans de l'éthanol et ajout à raison de 2mg/m² de PEI en tant que dispersant stérique. Le taux de matière sèche de la suspension est compris entre 15% et 20% en volume
4/ Imprégnation par APS (4bar/vide) dans une structure fibreuse composée de fibres céramiques, revêtues d'une interphase de pyrocarbone et d'une consolidation SiC
5/ Traitement thermique par procédé de synthèse par réaction auto-entretenue à haute température : amorçage de la réaction à 650°C sous atmosphère inerte. Refroidissement contrôlé jusqu'à température ambiante.

Les poudres de Ti, Si et C réagissent à l'intérieur de la porosité de la structure fibreuse afin d'obtenir une matrice composée de TiC et SiC, selon la réaction suivante :

xTi ₍ₛ₎ + (1-x)Si ₍ₛ₎ + C ₍ₛ₎ → xTiC ₍ₛ₎ + (1-x)SiC ₍ₛ₎

La réaction menant à la synthèse de TiC par synthèse par réaction auto-entretenue à haute température est extrêmement exothermique et rapide. En revanche, bien que la réaction entre Si et C pour former SiC, soit également exothermique, elle ne l'est pas suffisamment pour s'auto-entretenir.

Ainsi, la synthèse d'un matériau composé de TiC et SiC peut être réalisé en couplant une réaction exothermique puissante (Ti+C) avec une de plus faible intensité (Si+C). Il est à noter que dans ce cas la réaction ne nécessite pas la participation d'une phase gazeuse pour se propager.

### Exemple 6 : formation d'une matrice comportant une phase de AlN (hors invention)

La séquence des différentes étapes d'un autre exemple de procédé selon l'invention est détaillée ci-dessous :
1/ Mélange de poudres commerciales avec rapport massique Al/AlN = 1 ou Al/Si₃N₄ = 1, présence dans le mélange de NH₄F à 3% en masse et de C à 3% en masse
2/ Mise en suspension dans de l'éthanol et ajout à raison de 2mg/m² de PEI en tant que dispersant stérique. Le taux de matière sèche est compris entre 15% et 20% en volume
3/ Imprégnation par APS (4bar/vide) dans une structure fibreuse composée de fibres céramiques, revêtues d'une interphase de pyrocarbone et d'une consolidation SiC
4/ Traitement thermique par synthèse par réaction auto-entretenue à haute température : amorçage à 1100°C pour une vitesse de chauffage de 200°C/min sous 50bar de diazote. Palier en température de 30min. Refroidissement contrôlé jusqu'à température ambiante.

L'aluminium réagit avec la phase gazeuse pour former AIN, dans la porosité de la préforme fibreuse, selon la réaction suivante :

2Al ₍ₛ₎ + N_{2 (g)} → 2AlN ₍ₛ₎

L'ajout de poudre de carbone permet avantageusement d'augmenter le rendement de nitruration de l'aluminium, en réagissant avec la couche d'alumine protectrice sur les particules d'aluminium (réduction chimique).

### Exemple 7 : formation d'une matrice comportant des phases de BN et de Ti-C-N (hors invention)

La séquence des différentes étapes d'un autre exemple de procédé selon l'invention est détaillée ci-dessous :
1/ Broyage, si nécessaire, du B₄C sous isopropanol/éthanol
2/ Mélange des poudres selon le rapport molaire Ti/B₄C = 1
3/ Mise en suspension dans de l'éthanol et ajout à raison de 2mg/m² de PEI en tant que dispersant stérique. Le taux de matière sèche est compris entre 15% et 20% en volume
4/ Imprégnation par APS (4bar/vide) dans une structure fibreuse composée de fibres céramiques, revêtues d'une interphase pyrocarbone et d'une consolidation SiC
5/ Traitement thermique par synthèse par réaction auto-entretenue à haute température : amorçage de la réaction par un filament électrique, sous 1000bar de diazote

Les poudres réagissent avec la phase gazeuse pour former une matrice composée de BN et Ti-C-N, dans la porosité de la structure fibreuse, selon la réaction suivante :

xTi ₍ₛ₎ + B₄C ₍ₛ₎ + [(4+y)/2] N_{2 (g)} → 4BN ₍ₛ₎ + Tiₓ-C-N_{y (s)}

TiN est formé préférentiellement durant la phase de combustion. Du carbone libre provenant de la décomposition de B₄C diffuse dans le réseau de TiN pour former une phase Ti-C-N.

### Exemple 8 : formation d'une matrice comportant des phases de Al₂O₃ et SiC (hors invention)

La séquence des différentes étapes d'un autre exemple de procédé selon l'invention est détaillée ci-dessous :
1/ Broyage de quartz α(SiO₂) dans de l'eau distillée. Les poudres obtenues présentent un diamètre médian compris entre 0,5 µm et 1µm.
2/ Mélange de poudres SiO₂, Al commerciale, C commerciale, dans des proportions respectives de 56%m, 33%m et 11%m
3/ Mise en suspension dans de l'éthanol et ajout à raison de 2mg/m² de PEI en tant que dispersant stérique. Le taux de matière sèche de la suspension est compris entre 15% et 20% en volume
4/ Imprégnation par APS (4bar/vide) dans une structure fibreuse composée de fibres céramiques, revêtues d'une interphase pyrocarbone et d'une consolidation SiC
5/ Traitement thermique par synthèse par réaction auto-entretenue à haute température : amorçage de la réaction par un filament électrique, sous atmosphère inerte.

Les poudres réagissent dans les porosités pour former SiC et Al₂O₃, selon la réaction suivante :

3SiO_{2 (s)} + 4Al ₍ₛ₎ + 3C ₍ₛ₎ → 3SiC ₍ₛ₎ + 2Al₂O_{3 (s)}

### Exemple 9 : formation d'une matrice comportant une phase de type SiAlON (hors invention)

La séquence des différentes étapes d'un autre exemple de procédé selon l'invention est détaillée ci-dessous :
1/ Broyage des poudres de SiO₂ sous eau et de Si sous isopropanol/éthanol. Les poudres ont un diamètre médian compris entre 0,5 µm et 1µm
2/ Mélange des poudres selon la composition suivante : 70% en masse de Si, 15% en masse de SiO₂, 15% en masse d'Al commercial. Une faible proportion massique d'Y₂O₃ (environ 3% en masse) est ajoutée pour stabiliser davantage la phase SiAlON formée
3/ Mise en suspension dans de l'éthanol et ajout à raison de 2mg/m² de PEI en tant que dispersant stérique. Le taux de matière sèche de la suspension est compris entre 15% et 20% en volume
4/ Imprégnation par APS (4bar/vide) dans une structure fibreuse composée de fibres céramiques, revêtues d'une interphase de pyrocarbone et d'une consolidation SiC
5/ Traitement thermique par synthèse par réaction auto-entretenue à haute température : montée jusqu'à 1400°C à la vitesse de 200°C/min sous 10bar de diazote. Palier en température de 30min. Refroidissement contrôlé jusqu'à température ambiante.

Un SiAlON est formé dans la porosité de la préforme selon la réaction suivante :

4,5Si ₍ₛ₎ + Al ₍ₛ₎ + 0,5SiO_{2 (s)} + 3,5N_{2 (g)} → β-Si₅AlON_{7 (s)}

### Exemple 10 : formation d'une matrice comportant une phase de Si₂N₂O et une barrière environnementale/thermique (selon l'invention)

La séquence des différentes étapes d'un autre exemple de procédé selon l'invention est détaillée ci-dessous :
1/ Broyage des poudres de SiO₂, de mullite (3Al₂O₃.2SiO₂) et de Y₂Si₂O₇ sous eau et de Si sous isopropanol/éthanol. Les poudres ont un diamètre médian compris entre 0,5 µm et 1µm.
2/ Première imprégnation par APS d'une structure fibreuse par un premier mélange de poudres, constitué de 58% en masse de Si et 42% en masse de SiO₂, préalablement mises en suspension aqueuse à pH 9, la suspension étant chargée à 20% en volume.
3/ Séchage du matériau à 100°C pendant une nuit.
4/ Seconde imprégnation, par transfert sous vide, de la structure fibreuse par un second mélange de poudres constitué de 72% en masse de Y₂Si₂O₇ et 28% en masse de mullite, préalablement mises en suspension aqueuse à pH 12, la suspension étant chargée à 25% en volume.
5/ Séchage du matériau à 100°C pendant une nuit.
6/ Traitement thermique par synthèse par réaction auto-entretenue à haute température : montée jusqu'à 1450°C à la vitesse de 200°C/min sous 20bar de diazote. Palier en température de 30min. Refroidissement contrôlé jusqu'à la température ambiante.

Si₂N₂O est formé dans les porosités de la structure fibreuse et Al₂O₃, Y₂O₃ et SiO₂ sont formés en surface de la pièce, sur quelques dizaines de microns de profondeur.

L'expression « comportant/contenant un(e) » doit se comprendre comme « comportant/contenant au moins un(e) ».

L'expression « compris(e) entre ... et ... » ou « allant de ... à ... » doit se comprendre comme incluant les bornes.

## Revendications

1. Procédé de fabrication d'une pièce en matériau composite à matrice céramique comportant l'étape suivante :
a) fabrication de la pièce par formation d'une matrice céramique dans la porosité d'une structure fibreuse, la matrice céramique étant formée par synthèse par réaction auto-entretenue à haute température à partir d'une composition pulvérulente présente dans la porosité de la structure fibreuse, la matrice formée lors de l'étape a) comportant majoritairement en masse :
- du Si₂N₂O formé par synthèse par réaction auto-entretenue à haute température par réaction chimique entre une poudre de silicium, une poudre de silice et une phase gazeuse comportant l'élément N,
ledit procédé comprenant l'introduction d'une poudre de silicium dans la porosité de la structure fibreuse avant l'étape a) et un traitement d'oxydation partielle de la poudre de silicium avant l'étape a) permettant de convertir tout ou une partie de la poudre de silicium en silice

2. Procédé selon la revendication 1, **caractérisé en ce que** l'on réalise :
- une étape b) de densification préliminaire de la structure fibreuse par un procédé différent du procédé de synthèse par réaction auto-entretenue à haute température avant l'étape a), et/ou
- une étape c) de densification complémentaire de la pièce après l'étape a).

3. Procédé selon la revendication 1 ou 2, **caractérisé en ce que** les étapes suivantes sont réalisées avant l'étape a) :
- introduction dans la porosité de la structure fibreuse d'au moins une première poudre, puis
- introduction dans la porosité de la structure fibreuse d'au moins une seconde poudre différente de la première,
une matrice céramique dont la composition évolue lorsque l'on se déplace vers une surface externe de la pièce étant obtenue après l'étape a).

4. Procédé selon l'une quelconque des revendications 1 à 3, **caractérisé en ce que** la matrice formée lors de l'étape a) comporte majoritairement en masse du Si₂N₂O formé par synthèse par réaction auto-entretenue à haute température par réaction chimique entre une poudre de silicium, une poudre de silice et une phase gazeuse comportant l'élément N et **en ce que** une poudre comportant du bore est présente dans la porosité de la structure fibreuse avant l'étape a), la poudre comportant du bore formant durant l'étape a) une phase de BN par réaction de nitruration avec la phase gazeuse.

5. Procédé selon l'une quelconque des revendications 1 à 4, **caractérisé en ce qu'**il comporte, en outre, une étape de formation d'une barrière environnementale et/ou thermique, la barrière environnementale et/ou thermique étant présente, après l'étape a), le long de tout ou partie d'une surface externe de la pièce.

## Patentansprüche

1. Verfahren zur Herstellung eines Teils aus Verbundstoff mit Keramikmatrix, das den folgenden Schritt aufweist:
a) Herstellen des Teils durch Bilden einer Keramikmatrix in der Porosität einer Faserstruktur, wobei die Keramikmatrix durch Synthese mittels einer selbsterhaltenden Reaktion bei hoher Temperatur aus einer pulverförmigen Zusammensetzung gebildet wird, die in der Porosität der Faserstruktur vorhanden ist, wobei die bei Schritt a) gebildete Matrix mehrheitlich in Masse aufweist:
- Si₂N₂O, gebildet durch Synthese mittels einer selbsterhaltenden Reaktion bei hoher Temperatur durch chemische Reaktion zwischen einem Siliciumpulver, einem Siliciumdioxidpulver und einer Gasphase, die das Element N aufweist,
wobei das Verfahren das Einleiten eines Siliciumpulvers in die Porosität der Faserstruktur vor dem Schritt a) und eine Teiloxidationsbehandlung des Siliciumpulvers vor dem Schritt a) umfasst, die erlaubt, das gesamte oder einen Teil des Siliciumpulvers in Siliciumdioxid umzuwandeln.

2. Verfahren nach Anspruch 1, **dadurch gekennzeichnet, dass** durchgeführt wird:
- ein vorheriger Verdichtungsschritt b) der Faserstruktur mittels eines Verfahrens, das sich von dem Syntheseverfahren mittels einer selbsterhaltenden Reaktion bei hoher Temperatur unterscheidet, vor Schritt a), und/oder
- ein komplementärer Verdichtungsschritt c) des Teils nach Schritt a).

3. Verfahren nach Anspruch 1 oder 2, **dadurch gekennzeichnet, dass** die folgenden Schritte vor Schritt a) durchgeführt werden:
- Einleiten mindestens eines ersten Pulvers in die Porosität der Faserstruktur, dann
- Einleiten mindestens eines zweiten Pulvers, das sich vom ersten unterscheidet, in die Porosität der Faserstruktur,
wobei eine Keramikmatrix, deren Zusammensetzung sich bei Verlagerung in Richtung einer äußeren Oberfläche des Teils verändert, nach Schritt a) erhalten wird.

4. Verfahren nach einem der Ansprüche 1 bis 3, **dadurch gekennzeichnet, dass** die in Schritt a) gebildete Matrix mehrheitlich in Masse Si₂N₂O aufweist, gebildet durch Synthese mittels einer selbsterhaltenden Reaktion bei hoher Temperatur durch chemische Reaktion zwischen einem Siliciumpulver, einem Siliciumdioxidpulver und einer Gasphase, die das Element N aufweist, und dass ein Pulver, das Bor aufweist, in der Porosität der Faserstruktur vor Schritt a) vorhanden ist, wobei das Pulver, das Bor aufweist, während Schritt a) eine BN-Phase durch Nitrierungsreaktion mit der Gasphase bildet.

5. Verfahren nach einem der Ansprüche 1 bis 4, **dadurch gekennzeichnet, dass** es ferner einen Schritt des Bildens einer Umwelt- und/oder thermischen Barriere aufweist, wobei die Umwelt- und/oder thermische Barriere nach Schritt a) entlang der gesamten oder eines Teils einer äußeren Oberfläche des Teils vorhanden ist.

## Claims

1. A method of fabricating a part made of ceramic matrix composite material, the method comprising the following step:
a) fabricating the part by forming a ceramic matrix in the pores of a fiber structure, the ceramic matrix being formed by self propagating high temperature synthesis from a powder composition present in the pores of the fiber structure;
the matrix formed during step a) comprising a majority by weight:
- of Si₂N₂O formed by self propagating high temperature synthesis by chemical reaction between a silicon powder, a silica powder, and a gaseous phase comprising the element N,
said process comprising inserting a silicon powder into the pores of the fiber structure prior to step a), and treatment for partial oxidation of the silicon powder prior to step a), this partial oxidation treatment serving to convert some or all of the silicon powder into silica.

2. A method according to claim 1, **characterized in that** it is performed :
- a preliminary step b) of densifying the fiber structure by a method other than the method of self propagating high temperature synthesis prior to step a), and/or;
- an additional step c) of densifying the part after step a).

3. A method according to claim 1 or 2, **characterized in that** the following steps are performed before step a):
- inserting at least a first powder into the pores of the fiber structure; and then
- inserting at least a second powder different from the first into the pores of the fiber structure;
a ceramic matrix of composition that varies on going towards the outside surface of the part being obtained after step a).

4. A method according to any one of claims 1 to 3, **characterized in that** the matrix formed during step a) comprises a majority by weight of Si₂N₂O formed by self propagating high temperature synthesis by chemical reaction between a silicon powder, a silica powder, and a gaseous phase comprising the element N, and **in that** a powder comprising boron is present in the pores of the fiber structure prior to step a), and during step a) the powder comprising boron forms a BN phase by a nitriding reaction with the gaseous phase.

5. A method according to any one of claims 1 to 4, **characterized in that** it further comprises a step of forming an environmental and/or thermal barrier, the environmental and/or thermal barrier being present after step a) over all or some of an outside surface of the part.
